## Europäisches Patentamt

## European Patent Office

## Office européen des brevets

(19)

(11) Veröffentlichungsnummer : **0 244 573**
**B1**

(12)

# EUROPÄISCHE PATENTSCHRIFT

(45) Veröffentlichungstag der Patentschrift :
11.01.89

(21) Anmeldenummer : 87102220.8

(22) Anmeldetag : 17.02.87

(51) Int. Cl.⁴ : **B 62 D 55/205**, B 62 D 55/088

(54) Gleiskettengelenk.

(30) Priorität : 20.03.86 DE 3609334

(43) Veröffentlichungstag der Anmeldung :
11.11.87 Patentblatt 87/46

(45) Bekanntmachung des Hinweises auf die Patenterteilung : 11.01.89 Patentblatt 89/02

(84) Benannte Vertragsstaaten :
CH DE FR GB IT LI

(56) Entgegenhaltungen :
FR--A-- 854 082
US--A-- 2 342 675
US--A-- 2 391 524
US--A-- 2 474 057
US--A-- 2 911 840
US--A-- 3 279 868

(73) Patentinhaber : INA Wälzlager Schaeffler KG
Industriestrasse 1-3 Postfach 1220
D-8522 Herzogenaurach (DE)

(72) Erfinder : Bender, Rolf, Dipl.-Ing.
Glaubergstrasse 4
D-6368 Bad Vilbel (DE)
Erfinder : Pfuderer, Horst, Dipl.-Ing.(FH)
Bachstrasse 2
D-6057 Dietzenbach (DE)

(74) Vertreter : Klug, Horst, Dipl.-Ing. (FH)
c/o INA Wälzlager Schaeffler KG Postfach 12 20
D-8522 Herzogenaurach (DE)

## Beschreibung

Die Erfindung betrifft ein Gleiskettengelenk, bestehend aus durch Bolzen gelenkig miteinander verbundenen Kettengliedern, wobei sich je ein Bolzen durch Bohrungen einander benachbarter Kettenglieder erstreckt, der in den Bohrungen des einen Kettengliedes unmittelbar und in denen des anderen mittels federnder ringförmiger Elemente aus einem polymeren Werkstoff aufgenommen ist, welche mit dem Bolzen stoffschlüssig, z. B. durch Vulkanisieren, und mit den Wandungen der Bohrungen reibschlüssig verbunden sind.

Bei mit derartigen Gelenken versehenen, vorzugsweise für geländegängige Kraftfahrzeuge bestimmten Gleisketten werden die federnden ringförmigen Elemente nicht nur durch die in der Gleiskette wirksame Zugkraft beansprucht, sondern außerdem beim Lauf der Gleiskette über Umlenkrollen bzw. Bodenwellen Belastungen ausgesetzt, die aus dem dabei auftretenden Beugungswinkel zwischen benachbarten Kettengliedern resultieren.

Um zu vermeiden, daß die Gleiskette durch ein Versagen der federnden ringförmigen Elemente unter dieser kombinierten Beanspruchung frühzeitig ausfällt, ist bei einer bekannten Gleiskette jedes zweite Kettenglied als extrem kurzes Zwischenglied ausgeführt, das in seinen Bohrungen jeweils einen Bolzen unmittelbar aufnimmt. Durch diese Maßnahme wird der von den jedem Bolzen zugeordneten federnden ringförmigen Elementen aufzunehmende Beugungswinkel im Vergleich zu den Verhältnissen bei einer Kette ohne Zwischenglieder nahezu halbiert wodurch die federnden ringförmigen Elemente der kombinierten Belastung über einen ausreichenden Zeitraum standhalten.

Nachteilig an einer solchen Gleiskette ist, daß der zulässige Beugungswinkel bei gegebener Zugkraft dennoch stark begrenzt ist und daß durch die Notwendigkeit von Zwischengliedern und zusätzlichen Bolzen die Masse der Gleiskette beträchtlich erhöht wird. Außerdem entstehen zusätzliche Material-, Fertigungs- und Montagekosten.

Es ist auch bekannt, statt der federnden ringförmigen Elemente für die Lagerung des Bolzens in der Bohrung eines Kettengliedes Wälzlager zu verwenden. Solche Gleiskettengelenke zeigt die US-A-2 342 675. Auch bei den Ausführungen nach der US-A-3 279 868 ist die Lagerung eines Bolzens in einem Kettenglied mit Wälzlagern, und zwar mit Nadellagern, durchgeführt. Da hier keine federnden ringförmigen Elemente vorgesehen sind, tritt das Problem eines Ausfalls der Kette infolge einer zu hohen Belastung federnder ringförmiger Elemente nicht auf. Dagegen besteht bei der Verwendung von Nadellagern die Gefahr, daß sich an der Lauffläche der Lagerhülse Eindrückungen an den Berührungsstellen der Wälzkörper infolge der Zugbelastung in der Kette ergeben, da im Betrieb der Kette keine völlig umlaufende Bewegung der Wälzkörper erfolgt, sondern immer nur wenige Wälzkörper des Lagers infolge der Kettenzugbelastung an denselben Stellen auf die innere Oberfläche der Lagerhülse einwirken. Die Folge ist dann eine von den Eindrückungen hervorgerufene Riffelung der Wälzkörperlauffläche, die im weiteren Betrieb zur schnellen Zerstörung des Lagers führt.

Der Erfindung liegt die Aufgabe zugrunde, ein Gleiskettengelenk der eingangs genannten Art mit erhöhter Lebensdauer zu schaffen. Dabei sollen Zwischenglieder und zusätzliche Bolzen entfallen können und dennoch größere Beugungswinkel als bei bekannten Gleiskettengelenken möglich sein, ohne daß dies die Lebensdauer nachteilig beeinflußt.

Nach der Erfindung wird dies dadurch erreicht, daß der Bolzen in den Bohrungen des anderen Kettengliedes außerdem mittels jeweils wenigstens eines zwischen einander benachbarten federnden ringförmigen Elementen angeordneten Wälzlagers aufgenommen ist.

Durch diese Maßnahme werden die federnden ringförmigen Elemente von der Zugkraft völlig entlastet und sind nur noch der Beanspruchung infolge des zwischen benachbarten Kettengliedern auftretenden Beugungswinkels ausgesetzt, so daß in Anbetracht der geringeren Belastung der federnden ringförmigen Elemente Zwischenglieder und die durch diese bedingten zusätzlichen Bolzen entfallen können. Das erfindungsgemäße Gleiskettengelenk ist dennoch für große Beugungswinkel geeignet, ohne daß seine Lebensdauer gegenüber der von bekannten Gleiskettengelenken geringer wäre.

Dadurch, daß die Wälzlager zwischen einander benachbarten federnden ringförmigen Elementen, die mit den Bolzen bzw. den Wandungen der Bohrungen verbunden sind, angeordnet sind, ist jegliches Eindringen von Fremdkörpern oder sonstigen schädlichen Medien in jenen Raum, in dem die Wälzlager angeordnet sind, ausgeschlossen, woraus eine hohe Lebensdauer der Wälzlager resultiert.

Nach einer Variante der Erfindung ist vorgesehen, daß das Wälzlager als Nadellager mit einem dünnwandigen äußeren Laufring mit einer beiderseits durch radial nach innen gerichtete Borde begrenzten Lauffläche für Nadeln ausgebildet ist, die unmittelbar auf der Mantelfläche des Bolzens abrollen. Durch diese Maßnahme wird der benötigte Bauraum im Vergleich zu einer Gleiskette ohne Wälzlager praktisch nicht vergrößert und die erforderliche Führung der Wälzkörper sichergestellt.

Eine Ausführungsform der Erfindung sieht vor, daß axial außerhalb der Borde des äußeren Laufringes in deren unmittelbarer Nähe Scheiben auf dem Bolzen gehaltert sind, deren Außendurchmesser so bemessen ist, daß sie sich mit den Borden radial überdecken. Diese Maßnahme ist insbesondere dann von Bedeutung, wenn die federnden ringförmigen Elemente auf dem Bolzen durch Vulkanisieren befestigt werden. Wegen der Anordnung der Nadellager zwischen den federnden ringförmigen Elementen ist es erforderlich, daß diese während des Vulkanisiervorgangs bereits auf dem Bolzen angeordnet sind. Durch die Scheiben wird dann der Austritt des infolge der beim Vulkanisieren auftretenden Temperaturen dünnflüssig werdenden Schmiermittels aus den Nadellagern vermieden.

Um im Falle von elastischen Durchbiegungen des Bolzens unzulässige Kantenbelastungen der Nadeln zu vermeiden, sieht eine Ausführung der Erfindung vor, daß zwischen der äußeren Mantelfläche des äußeren Laufringes und der Wandung der ihn aufnehmenden Bohrung eine dünne Schicht eines elastisch federnden polymeren Werkstoffs vorgesehen ist, die es dem äußeren Laufring gestattet, sich der Durchbiegung des Bolzens entsprechend in der Bohrung schrägzustellen. Vorteilhafterweise ist die Schicht ringförmig ausgebildet und mit dem äußeren Laufring stoffschlüssig, insbesondere durch Vulkanisieren, verbunden.

Eine letzte Variante der Erfindung sieht vor, daß in den Bohrungen an dem einen Ende jedes Kettengliedes der Bolzen unmittelbar und in den Bohrungen an dem anderen Ende mittels der federnden ringförmigen Elemente und der Wälzlager aufgenommen ist. Die Gleiskette kann dann aus völlig identischen Kettengliedern zusammengesetzt werden.

In den beigefügten Figuren ist ein Ausführungsbeispiel der Erfindung dargestellt. Es zeigen :

Fig. 1 einen Schnitt nach Linie I-I in Fig. 2 durch einen Abschnitt einer Gleiskette mit erfindungsgemäßen Gleiskettengelenken,

Fig. 2 einen Schnitt nach Linie II-II in Fig. 1,

Fig. 3 in vergrößerter Darstellung die Einzelheit A aus Fig. 1 und

Fig. 4 in weiter vergrößerter Darstellung eine Einzelheit eines erfindungsgemäßen Gleiskettengelenks im Schnitt.

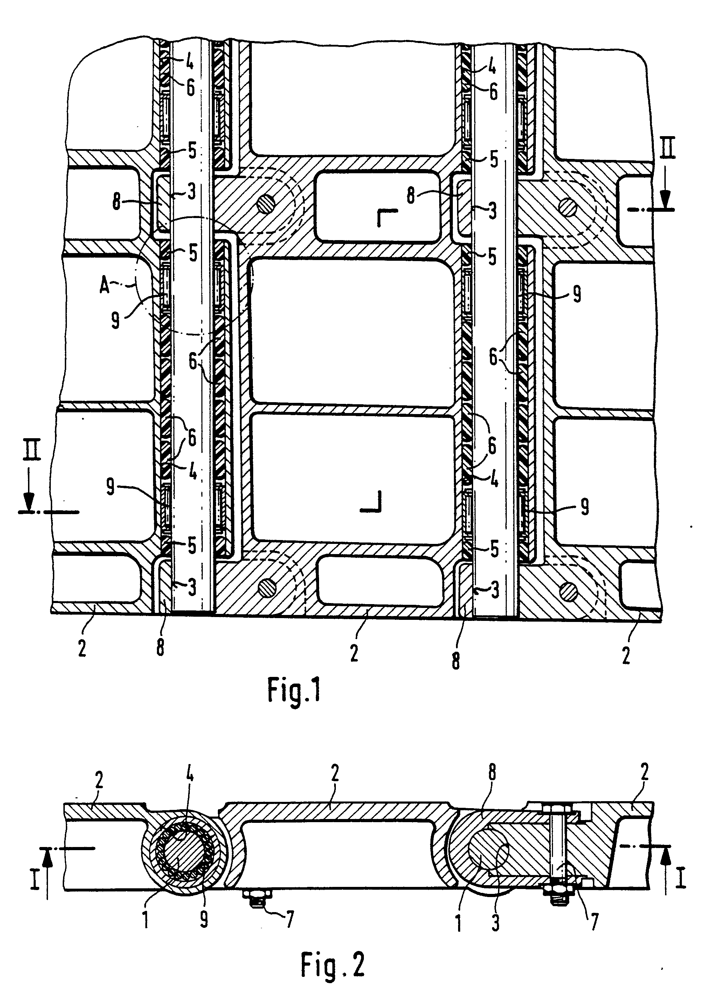

Wie aus den Fig. 1 bis 3 ersichtlich ist, besteht die Gleiskette mit den erfindungsgemäßen Gleiskettengelenken aus durch Bolzen 1 gelenkig miteinander verbundenen Kettengliedern 2, wobei sich je ein Bolzen 1 durch Bohrungen 3 und 4 einander benachbarter Kettenglieder 2 erstreckt. Während jeder Bolzen 1 in den Bohrungen 3 des einen zweier benachbarter Kettenglieder 2 unmittelbar aufgenommen ist, ist er in den Bohrungen 4 des anderen mittels federnder ringförmiger Elemente 5 und 6 aus synthetischem Gummi aufgenommen. Diese sind mit dem jeweiligen Bolzen 1 stoffschlüssig und den Wandungen der entsprechenden Bohrungen 4 reibschlüssig verbunden. Die Bohrungen 3, in denen der Bolzen 1 jeweils unmittelbar aufgenommen ist, sind durch das jeweilige Kettenglied 2 und an diesem mittels Schrauben 7 befestigte Verbinder 8 gebildet.

Jeder Bolzen 1 ist außerdem durch zwischen einander benachbarten Elementen 5 und 6 angeordnete Nadellager 9 in den Bohrungen 4 aufgenommen. Durch die Anordnung des Nadellagers 9 zwischen den Elementen 5 und 6, die jeweils einerseits mit dem Bolzen 1 stoffschlüssig und andererseits mit den Wandungen der Bohrungen 4 reibschlüssig verbunden sind, ergibt sich eine äußerst wirkungsvolle Abdichtung des Nadellagers 9 gegen das Eindringen von Verunreinigungen bzw. den Verlust von Schmiermittel, die infolge der Tatsache, daß die Elemente 5 und 6 weder mit dem Bolzen 1 noch den Wandungen der Bohrungen 4 in gleitendem Eingriff stehen, keinerlei Verschleiß unterliegt.

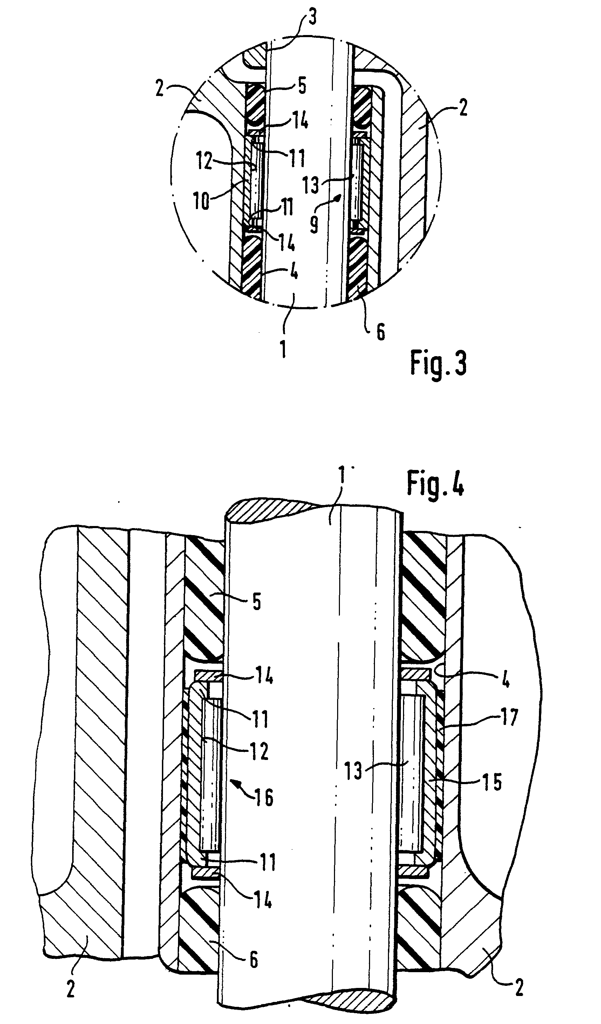

Wie aus Fig. 3 ersichtlich, bestehen die Nadellager 9 jeweils aus einem dünnwandigen äußeren Laufring 10 mit einer beiderseits durch radial nach innen gerichtete Borde 11 begrenzten Lauffläche 12, auf welcher die Nadeln 13 abrollen, die andererseits unmittelbar auf der Mantelfläche des entsprechenden Bolzens 1 abrollen.

Axial außerhalb der Borde 11 der Laufringe 10 sind in deren unmittelbarer Nähe Scheiben 14 reibschlüssig auf dem jeweiligen Bolzen 1 gehaltert, deren Außendurchmesser so bemessen ist, daß sie sich mit den Borden 11 radial überdecken.

Die Kettenglieder 2 sind sämtlich identisch ausgebildet, das heißt, sie weisen jeweils an ihrem einen Ende Bohrungen 3 zur unmittelbaren Aufnahme eines Bolzens 1 auf, während sie an ihrem anderen Ende Bohrungen 4 aufweisen, in denen ein anderer Bolzen 1 durch Elemente 5 und 6 und zwischen diesen angeordnete Nadellager 9 aufgenommen ist.

Die Gleiskette mit dem in Fig. 4 dargestellten Gleiskettengelenk unterscheidet sich von der zuvor beschriebenen dadurch, daß zwischen der äußeren Mantelfläche des äußeren Laufringes 15 des Nadellagers 16, mittels dessen der Bolzen 1 in der Bohrung 4 des Kettengliedes 2 aufgenommen ist, und deren Wandung eine dünne Schicht 17 eines elastisch federnden polymeren Werkstoffs vorgesehen ist, die ringförmig ausgebildet und an der äußeren Mantelfläche des äußeren Laufringes 15 durch Vulkanisieren befestigt ist.

Ausbildung und Anzahl der Elemente 5 bzw. 6 sowie der Wälzlager 9 bzw. 16 sind ebenso wie die Gestaltung der Kettenglieder 2 und der Verbinder 8 nur beispielhaft zu verstehen und können im Rahmen der Erfindung dem jeweiligen Zweck entsprechend anders als in dem Ausführungsbeispiel dargestellt ausgeführt sein.

**Patentansprüche**

1. Gleiskettengelenk, bestehend aus durch Bolzen (1) gelenkig miteinander verbundenen Kettengliedern (2), wobei sich je ein Bolzen durch Bohrungen (3, 4) einander benachbarter Kettenglieder erstreckt, der in den Bohrungen des einen Kettengliedes unmittelbar und in denen des anderen mittels federnder ringförmiger Elemente (5, 6) aus einem polymeren Werkstoff aufgenommen ist, welche mit dem Bolzen stoffschlüssig, z. B. durch Vulkanisieren, und mit den Wandungen der Bohrungen reibschlüssig verbunden sind, dadurch gekennzeichnet, daß der Bolzen (1) in den Bohrungen (4) des anderen Kettengliedes (2) außerdem mittels jeweils wenigstens eines zwischen einander benachbarten federnden ringförmigen Elementen (5, 6) angeordneten Wälzlagers (9, 16) aufgenommen ist.

2. Gleiskettengelenk nach Anspruch 1, dadurch gekennzeichnet, daß das Wälzlager als Nadellager (9, 16) mit einem dünnwandigen äußeren Laufring (10, 15) mit einer beiderseits durch radial nach innen gerichtete Borde (11) begrenzten Lauffläche (12) für Nadeln (13) ausgebildet ist, die unmittelbar auf der Mantelfläche des Bolzens (1) abrollen.

3. Gleiskettengelenk nach Anspruch 2, dadurch gekennzeichnet, daß axial außerhalb der Borde (11) des äußeren Laufringes (10, 15) in deren unmittelbarer Nähe Scheiben (14) auf dem Bolzen (1) gehaltert sind, deren Außendurchmesser so bemessen ist, daß sie sich mit den Borden (11) radial überdecken.

4. Gleiskettengelenk nach Anspruch 2 oder 3, dadurch gekennzeichnet, daß zwischen der äußeren Mantelfläche des äußeren Laufringes (15) und der Wandung der ihn aufnehmenden Bohrung (4) eine dünne Schicht (17) eines elastisch federnden polymeren Werkstoffs vorgesehen ist.

5. Gleiskettengelenk nach Anspruch 4, dadurch gekennzeichnet, daß die Schicht (17) ringförmig ausgebildet und mit dem äußeren Laufring (15) stoffschlüssig, insbesondere durch Vulkanisieren, verbunden ist.

6. Gleiskettengelenk nach einem der Ansprüche 1 bis 5, dadurch gekennzeichnet, daß in den Bohrungen (3) an dem einen Ende jedes Kettengliedes (2) der Bolzen (1) unmittelbar und in den Bohrungen (4) an dem anderen Ende mittels der federnden ringförmigen Elemente (5, 6) und der Wälzlager (9, 16) aufgenommen ist.

**Claims**

1. Caterpillar track joint, consisting of link members (2) hinged together by pins (1), wherein each pin extends through bores (3, 4) of link members adjacent one another, being received directly in the bores of the one link member and in those of the other by means of resilient annular elements (5, 6) of a polymer material, which are connected with the pin by bonding, e. g. by vulcanising, and with the walls of the bores frictionally, characterized in that the pin (1) is received moreover in the bores (4) of the other link member (2) by means of for each at least one rolling bearing (9, 16) arranged between mutually adjacent resilient annular elements (5, 6).

2. Caterpillar track joint according to claim 1, characterized in that the rolling bearing (9, 16) is formed as a needle bearing (9, 16) with a thin-walled outer race ring (10, 15) with a running surface (12) for needles (13) delimited on both sides by radially inwardly directed rims (11), which needle rollers roll directly on the outside surface of the pin (1).

3. Caterpillar track joint according to claim 2, characterized in that axially outside the rims (11) of the outer race ring (10, 15) in their immediate vicinity washers (14) are mounted on the pin (1), whose outer diameter is so determined that they radially overlap the rims (11).

4. Caterpillar track joint according to claim 2 or 3, characterized in that a thin layer (17) of an elastically resilient polymer material is provided between the outer peripheral surface of the outer race ring (15) and the wall of the bore (4) receiving the same.

5. Caterpillar track joint according to claim 4, characterized in that the layer (17) is formed annularly and is bonded to the outer race ring (15), particularly by vulcanising.

6. Caterpillar track joint according to one of claims 1 to 5, characterized in that the pin (1) is received directly in the bores (3) at one end of each link member (2) and in the bores (4) at the other end by means of the resilient annular elements (5, 6) and the rolling bearings (9, 16).

**Revendications**

1. Chenille, comprenant des maillons (2) articulés entre eux au moyen de tourillons (1), chaque tourillon (1) passant par des alésages (3, 4) de maillons mutuellement voisins, en étant reçu dans les alésages de l'un des maillons directement et dans ceux de l'autre au moyen d'éléments annulaires élastiques (5, 6) en une matière polymère, qui sont reliés au tourillon par liaison matérielle, par exemple par vulcanisation, et sont assemblés par friction avec Les parois des alésages, caractérisée en ce que le tourillon (1) est reçu dans les alésages (4) de l'autre maillon (2), en outre, au moyen d'au moins chaque fois un roulement (9, 16) placé entre des éléments annulaires élastiques (5, 6) mutuellement voisins.

2. Chenille selon la revendication 1, caractérisée en ce que le roulement est réalisé sous la forme d'un roulement à aiguilles (9, 16) avec une bague extérieure à paroi mince (10, 15) comportant une surface de roulement (12) délimitée des deux côtés par des bords (11) dirigés radialement vers l'intérieur, pour des aiguilles (13) qui roulent directement sur la surface périphérique du tourillon (1).

3. Chenille selon la revendication 2, caractérisée en ce que des disques (14) sont retenus sur le tourillon (1), axialement à l'extérieur des bords (11) de la bague de roulement extérieure (10, 15) en leur voisinage immédiat, disques dont le diamètre extérieur est calculé de façon qu'ils s'étendent radialement sur les bords (11).

4. Chenille selon la revendication 2 ou 3, caractérisée en ce qu'une couche mince (17) d'une matière polymère élastiquement flexible est prévue entre la surface périphérique extérieure de la bague de roulement extérieure (15) et la paroi de l'alésage (4) qui la reçoit.

5. Chenille selon la revendication 4, caractérisée en ce que la couche (17) a une conformation annulaire et est reliée à la bague de roulement extérieure (15) par liaison matérielle, en particulier par vulcanisation.

6. Chenille selon l'une des revendications 1 à 5, caractérisée en ce que, dans les alésages (3) situés à l'une des extrémités de chaque maillon (2), le tourillon (1) est reçu directement et, dans les alésages (4) situés à l'autre extrémité, au moyen des éléments annulaires élastiques (5, 6) et des roulements (9, 16).

Fig.1

Fig.2

Fig.3

Fig.4